(19) **Europäisches Patentamt / European Patent Office / Office européen des brevets**

(11) **EP 2 023 159 A1**

(12) **EUROPEAN PATENT APPLICATION**

(43) Date of publication:
**11.02.2009 Bulletin 2009/07**

(51) Int Cl.:
**G01S 15/87** (2006.01)     **G01S 15/96** (2006.01)
**G01S 15/42** (2006.01)

(21) Application number: **07014389.6**

(22) Date of filing: **23.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Syddansk Universitet**
**5230 Odense M (DK)**

(72) Inventor: **Beedholm, Kristian**
**8530 Hjortshøj (DK)**

(74) Representative: **Roerboel, Leif et al**
**Budde Schou A/S**
**Vester Søgade 10**
**1601 Copenhagen V (DK)**

(54) **Method and system for echo localisations of objects**

(57) The present invention relates to echo localisation specifically in a sonar system, where the system comprises at least three omnidirectional transducers (hydrophones). Specifically the system according to the invention comprises at least one array of transducers that can each function both as signal emitters and signal receptors and where each individual transducer is characterised by a specific resonance frequency/band-limited operative frequency range. The system furthermore comprises excitation signals generating means for providing an excitation signal to each of said transducers, the excitation signal being able to cause each individual transducer to emit a wave energy signal at the specific resonance frequency or in said specific band limited operative frequency range of each individual transducer. Furthermore, the system comprises means for determining the time of arrival of an echo signal at each of said transducers, means for determining a relationship between the specific resonance frequency/band-limited operative frequency range and time of arrival at each of said transducers and means for determining the angle (α) between the transducer array and the direction to the echo source (ES) based on said relationship.

**Fig. 6**

EP 2 023 159 A1

**Description**

TECHNICAL FIELD

The present invention relates generally to the localisation of objects in space by echo localisation and more specifically to sonar systems and methods. And still more specifically to such systems utilising one or more arrays of omnidirectional transducers.

BACKGROUND OF THE INVENTION

Sonar systems traditionally utilise a transmitter and receiver that often, although not always, are integrated into the same unit. The transmitter emits a sound pulse of short duration and the receiver receives echoes from objects in the water column, reflected from the particular object. When the propagation speed of sound in water is known it is possible in a straightforward manner to determine the distance to the object. The magnitude of the individual echoes provides information about the size and the material of the objects. It is, however, also important to be able to determine the direction or the angle to the object giving rise to the echo. Traditionally this is attained by applying directional sound transmitters, emitting sound in a relatively narrow beam, the width of which reduces for higher frequencies and also the larger the dimensions of the transducer used. A given echo can thus be assumed to originate from objects in the direction, in which the sound is emitted. By either turning the transducer mechanically or by utilising a principle known as "phasing" it is possible in some systems to control the beam such that a larger volume of water is monitored. If the beam is very narrow, a substantial time is required to monitor a given area. If the beam is broader the resolution decreases.

Various sonar principles are known within the art. The simplest sonar systems find application as echo sounders, deep-sea sounders and for locating shoals of fishes. Often only a single transducer is used both for emitting a narrowband pulse and for receiving the echoes from reflecting objects. The emitted sound signal is directed vertically downwards relative to the vessel and the beam of sound need normally not be particularly narrow. If the beam is too narrow a shoal of fishes or an object may not be located if the vessel is not located vertically above it. It is a drawback of such a system that the objects giving rise to echoes can not be precisely localised with this system.

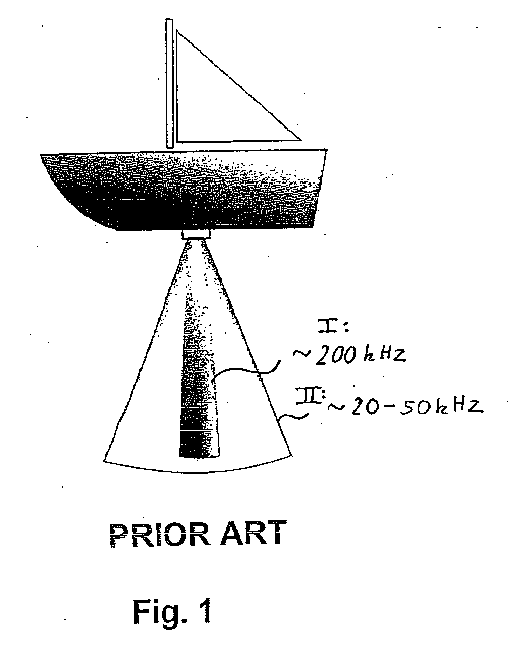

Another traditional sonar system is the so-called "dual beam" system, by means of which objects may be better localised. In such systems, signals at two frequencies resulting in different propagation patterns are used. The highest frequency, for instance at 200 kHz, produces a narrow beam that provides a good resolution in a direction substantially vertically below the vessel, while a signal at a lower frequency, for instance 20 to 50 kHz, may provide echoes from a broader region, although with reduced resolution. A prior art system of this kind is shown schematically in figure 1.

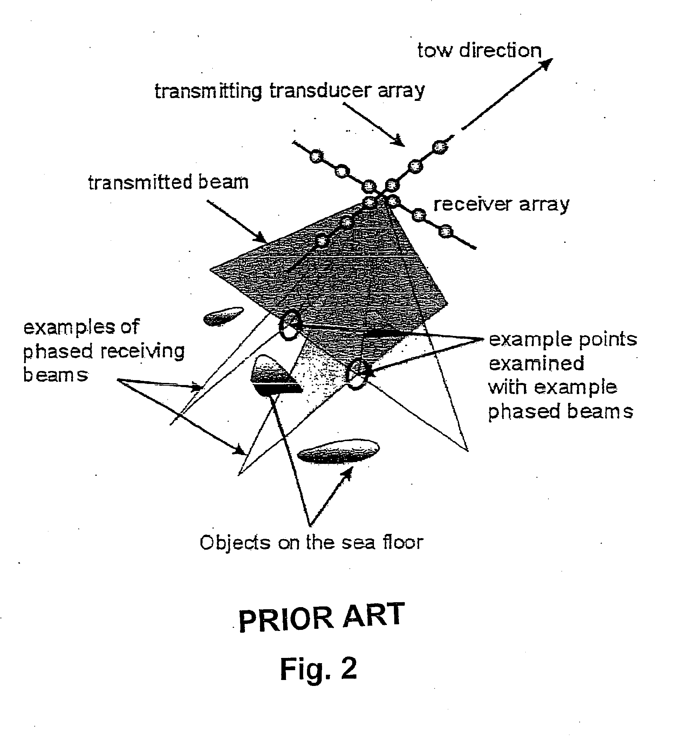

In a further traditional sonar system termed a "multi beam" system, the above-mentioned "phasing" principle is used. In this prior art system, the direction of a narrow beam may be controlled. This beam has the shape of a fan, i.e. it is highly directional in one plane and less directional in another plane. The phasing method makes it possible to "look" in many directions simultaneously. By means of a special sonar antenna formed as a cross (a so-called "Mill's cross") it is possible to emit a fan of sound in one plane and receive the echoes in many planes perpendicular to the plane of emission. This provides a unique determination of the angle to the object in two dimensions. This principle is for instance used to map the bottom of the sea by pulling the cross over the area to be described such that all details within this area are irradiated. This prior art principle is shown in figure 2.

The sound signal normally used in sonar systems is a so-called "ping", which is a narrowband pulse signal. More advanced systems use broadband signals that may be described as a "click". In those cases where the emission of large signal energy is required and where the emission takes place from a transducer (or after processing in an amplifier) with limited peak capacity, a so-called frequency sweep (normally termed a "chirp") can be used. By using this kind of signal, the frequency components contained in a broadband signal are temporally distributed over a longer time interval, whereby the signal starts with another frequency than the frequency at which it ends. In the receiver, the frequency-time-structure of the emitted signal is taken into account, whereby the total bandwidth is utilised to provide good localisation in time (and thereby in distance). Principally there is no difference between a "click" and a frequency sweep with regard to the quality of the sonar.

Referring to figure 1 there is shown a schematic view of a prior art dual beam sonar system. Applying two beams I and II of different solid angle of emitted sound pulses, a compromise is attained between relatively high resolution in the narrow beam I, that entails a risk of not detecting an echo source outside of this limited spatial region, and the wide beam II that gives poor information about an echo source's exact position. The sound signals used for producing the narrow beam I comprise typically frequency components in the region of 200 kHz, whereas the frequency components of the broader beam II typically lie in the frequency region of 20 to 50 kHz.

Referring to figure 2 a schematic representation of the prior art principle of multi beam sonar is given. By using the known phasing principle, the direction of a narrow beam of a fan-shaped directivity pattern can be controlled. By using a specific kind of sonar antenna comprising a transmitting array and a receiving array of transducers, where the two arrays form a cross (a so-called Mill's cross), it is possible to emit a fan-shaped beam in one plane and to receive the echoes from objects in a plurality of planes perpendicular to the transmitted beam. This method provides a unique determination of the angle to the object in two dimensions. The technique is illustrated in figure 2. The cross of transmitting and receiving transducers is towed over the region to be surveyed. One array (the transmitting array) transmits the sound signal, whereas the other (the receiving array) records the echoes for echo sources located in the transmitted beam. Due to the fan- or disc-shaped directivity patterns of the transmitter and receiver arrays, each emitted pulse ("ping") results in a mapping of a single narrow path over the sea floor. By utilising the phasing technique to displace this narrow path over the sea floor a total three-dimensional image of the sea floor is gradually built up.

The above prior art systems have all been directional, which relies on arrays of transducers both on the transmitting and receiving side of the system. It would be advantageous to provide an omnidirectional sonar system that would still be able to provide the desired information about the location of various objects in the water below a vessel. It would furthermore be advantageous to propose a system and corresponding method that could be used not only for sonar applications but also for radar applications.

SUMMARY OF THE INVENTION

On the above background, the present invention proposes an echo localisation system and method, such as a sonar system and corresponding method that is based on omnidirectional emission and reception of wave energy signals in a medium containing one or more objects acting as echo sources. In the following, this system and corresponding method will be described in terms of a sonar system, but the principles are equally suitable for other echo localisation systems such as a radar system.

With the system according to the invention, a rough three-dimensional mapping of the position of objects for instance in said medium is provided based on omnidirectionally emitted signals. The received echoes from objects hit by the emitted signals will look different in term of times of reception of the echo signals depending on the angle between the specific object and the transducer. These deviations in signal structure are used to determine a unique three-dimensional position after a suitable signal processing subsequent to the reception of the echoes. One possible application of the system or method according to the invention would be as a non-expensive alternative to prior art acoustical fish-localising systems or in combination with existing scanning-sonar systems as a method for quickly designating a volume containing echo sources.

According to the invention there is provided a system comprising at least three receiving transducers, not all of which are positioned in a straight line, i.e. defining at least a plane in space, for receiving echo signals from objects in a medium, such as water. The system furthermore comprises at least one emitting transducer for emitting signals into said medium, said signals when impinging on said objects giving rise to echoes (reflections) from these objects and these reflected signals being subsequently received by said receiving transducers. The at least one emitting transducer emits either as many separate signals as the number of receiving transducers or a composite signal comprising a number of signal components corresponding to the number of receiving transducers. Furthermore, a separate set of emitting and receiving transducers may be applied or, which may be advantageous in practice, there may be applied transducers that can function both as signal emitters and receptors. Thus, for instance a practical implementation of the invention may comprise three combined emitting/receiving transducers in a triangular configuration as shown in more detail in the detailed description of the invention. A first transducer may emit a narrowband acoustic signal with a centre frequency of for instance 50 kHz, a second transducer may emit a narrowband acoustic signal with a centre frequency of for instance 75 kHz and the third transducer may emit a narrowband acoustic signal with a centre frequency of for instance 100 kHz. These three separate signals may be emitted simultaneously, although this is not a prerequisite of the invention. The signals propagating through the medium are reflected from the object(s) and propagate from the object(s) back to the transducers, where they are received by the respective transducers. The respective times of arrival, or alternatively the respective propagation times, at each of the receiving transducers are recorded. Generally each signal, or separate signal component, is received at each respective receiving transducer at different times, and these differences in total propagation times are used to evaluate the position of the echo source in the medium in a manner described in principle in the following.

It should be noted that in principle the only requirement of the system and method according to the invention is that it must be possible to detect the time of arrival of the probe signal at each separate receiving transducer. Technically, this requires a sufficient signal to noise ratio of the signal actually provided to means for determining the time of arrival or propagation time. This requirement can be fulfilled by applying relatively broadband transducers with a suitable band pass filter with a narrow pass band to provide the signal to the time of arrival determining means or can more preferably be fulfilled by applying receiving transducers with a very narrow frequency response. Hydrophones are typically transducers that have this narrow frequency response. According to a preferred embodiment of the invention, the transducers function both as emitters of wave energy and as receptors of echo signals. Thus, in a preferred embodiment of the invention, the echo localisation system and method according to the invention use resonant hydrophones as transducers, each hydrophone being only active in a certain band-limited frequency range about a specific resonance frequency.

The principle of the invention can be summarised and exemplified by reference to the simple system comprising three transducers referred to above. For reference a three-dimensional Cartesian co-ordinate system is used with the XY-plane (z = 0) corresponding substantially to the surface of the water and containing the transducers T1, T2 and T3. The Z-axis extends vertically, and negative z-values indicate positions beneath the surface of the water. In this example all three transducers serve both as emitters of suitable acoustic signals and as receptors of echo signals from an object located beneath the surface of the water at co-ordinate (xo, yo, zo). The three emitted acoustic signals are in this example narrowband signals with centre frequencies F1, F2 and F3, respectively, which frequencies could be in the ultrasonic region, for instance from 50 kHz to 150 kHz. The chosen frequencies depend among others on the characteristics of the transducers.

In this example, two of the transducers (T1 and T2) are located along the X-axis, T1 at the origin of the co-ordinate system, and the third transducer is located along the Y-axis. Thus, simple linear arrays, each comprising two transducers, are formed: T1 and T2 along the X-axis and T1 and T3 along the Y-axis, the transducer T1 being common to both arrays. The two arrays in this specific example are thus perpendicular to each other, but this is not a prerequisite for the system and method of the invention. The transducers must at least be distributed over a plane in space, but could also be distributed over a more general three-dimensional surface in space.

Focusing on the two transducers T1 and T2 extending along the X-axis, T1 initially emits a signal S1 (centre frequency F1) and T2 simultaneously emits a different signal S2 (centre frequency F2). These emitted signals propagate through the medium (water) and eventually impinge on the object at (xo, yo, zo). Both signals are reflected from the object and propagate backwards towards the transducers, where the reflected version S1r of S1 hits the transducers T1 and T2 after certain time periods. These times of reception tr1 and tr2 will be equal if the object is located anywhere in the median plane of the two transducers T1 and T2. If the distance between the first transducer T1 and the object is less than the distance between the second transducer T2 and the object, the time of reception at T1 will be prior to the time of reception at T2. If, on the contrary, the distance between the first transducer T1 and the object is greater than the distance between the second transducer T2 and the object, the time of reception at T2 will be prior to the time of reception at T1. For a given difference between the times of reception at T1 and T2, the object can be located anywhere on a first given circle C1, the centre of which is located on the X-axis. The uncertainty as to exactly where on said circle the object is actually located is resolved by application of the other portion of the three-transducer array, i.e. the transducers T1 and T3, which in this example extends along the Y-axis, with T1 at the origin. Using a signal-emitting and -receiving procedure similar to the one described above for transducers T1 and T2, it can be determined that the object can be located anywhere on a second given circle C2. The actual location of the object will hence be at the point of intersection of the two circles C1 and C2.

The only prerequisite of the system and method according to the invention, as exemplified above, is that at least three transducers be used, that the transducers must not all be located in a line, i.e. they must determine at least a plane in space, and that it is possible to determine the times of reception of echo signals at the transducers.

Thus, according to the invention there is provided a method of echo localisation of objects in a medium, such as water, the method comprising the following steps:

- providing at least three receiving means defining either a two dimensional or a three-dimensional surface in space, where each of the receiving means functions to provide an output signal upon reception of an acoustic wave energy signal;
- providing at least one emitting means functioning to emit an acoustic wave energy signal into said medium when supplied with a driver signal;
- at a given time from said at least one emitting means emitting at least one acoustic wave energy signal into said medium;
- at each of said receiving means determining the time of reception of an echo signal from said object caused by reflections of said acoustic wave energy signals from said object;
- based on said times of reception determining the co-ordinates of said object.

According to a preferred embodiment of the method according to the invention, said receiving and emitting means may be implemented as transducers that can function both as emitting means and receiving means.

According to a preferred embodiment of the invention there will be the same number of emitting and receiving means, for instance three transducers (as in the example above) that both function as emitters and receivers.

According to the invention there is furthermore provided a system for echo localisation of objects in a medium, such as water, the system comprising:

- a two or three-dimensional array of receiving transducers that provide an electrical output signal upon reception of an acoustic wave energy signal;

- at least one emitting transducer functioning to emit an acoustic wave energy signal into said medium when supplied with a driver signal;
- means for driving said at least one emitting transducer comprising a signal source and, if necessary, a power amplifier;
- means for determining the times of reception of the signals received by said receiving transducers;
- means for determining the co-ordinates of an object (echo source) in said medium based on said determined times of reception of the signals received by said receiving transducers.

According to a preferred embodiment of the invention, said transducers are hydrophones that can function both as emitters of an acoustic wave energy signal and as receptors for such signals. Each of these hydrophones is characterised by an individual resonance frequency and the operative frequency range of each individual hydrophone is band limited around this individual resonance frequency.

The above principles can be implemented in many different ways in practice and two specific embodiments of the invention will be described in the detailed description of the invention.

BRIEF DESCRIPTION OF THE DRAWINGS

The invention will be better understood with reference to the following detailed description hereof in conjunction with the figures of the drawing, where:

Figure 1 is a schematic view of a prior art dual beam sonar system;

Figure 2 is a schematic representation of the prior art principle of multi beam sonar;

Figure 3(a) is a two dimensional representation of the transducer geometry of a first, simple embodiment of a system according to the invention;

Figure 3(b) is a three-dimensional representation corresponding to the transducer geometry of figure 2(a) with a reflecting object ES located in the water volume beneath the transducer array at coordinates (-1.2, 1.4, -1);

Figure 3(c) is a frequency/time plot illustrating received spectrograms at the three transducers (hydrophones) from a reflecting object plotted versus frequency and reception time;

Figure 4 is a flow chart illustrating the principles of the present invention;

Figure 5 is a three-dimensional view illustrating echo localisation of an echo source according to the principles of the invention applying an L-shaped transducer configuration; and

Figure 6 is a schematic representation of a second embodiment of the system according to the invention.

DETAILED DESCRIPTION OF THE INVENTION

The system and method according to the present invention can be embodied by many different implementations. There follows a detailed description of some specific embodiments of the invention, but it is understood that other embodiments would be possible and that such embodiments would also fall within the scope of the present invention as defined by the claims.

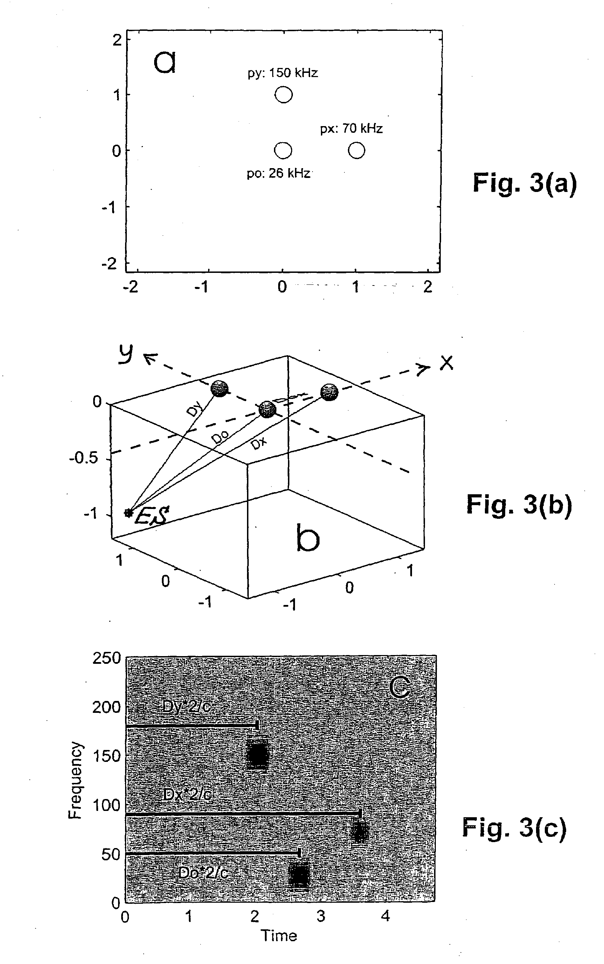

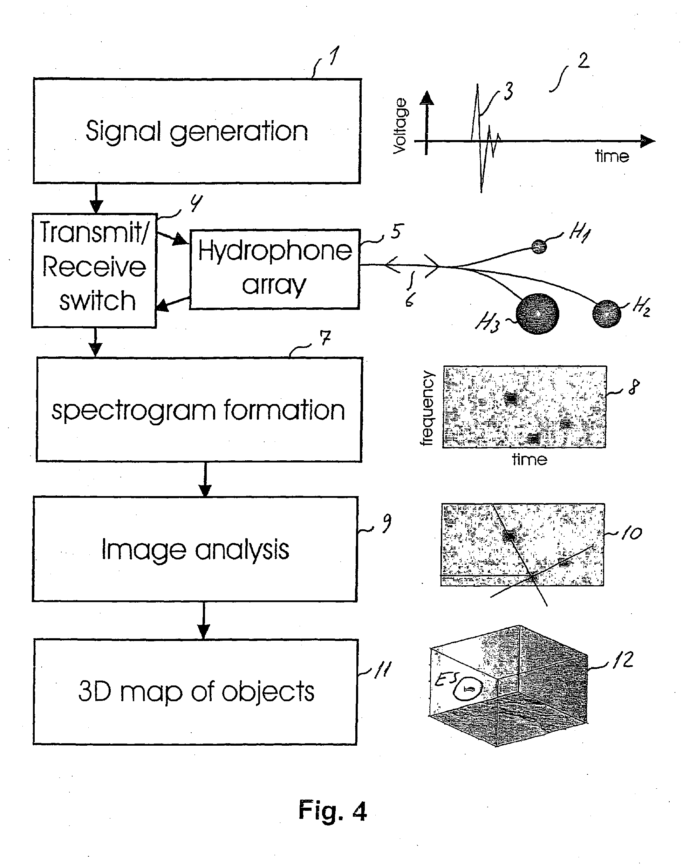

With reference to figures 3(a), 3(b), 3(c) and 4 there is shown a first embodiment of the system and method of the present invention comprising a very simple configuration of transducers. This embodiment can be augmented by increasing the number of transducers, which will increase the tolerance towards multiple reflectors in the scanned volume of water. Another modification could be aimed at blocking out ray paths directly below the array to increase the horizontal range beyond the distance corresponding to the height of the water column.

Referring to figures 3(a), (b) and (c) this embodiment comprises three resonant transducers po, px and py, arranged so that they form parts of two of the three axes, x and y with one transducer "po" at the origin (0,0,0) of a Cartesian coordinate system (X,Y,Z), one transducer, "px", is located at coordinates (1,0,0) and the last transducer, "py", is located at the coordinate (0,1,0). The three transducers are of the resonant type and resonate at the frequencies 26 kHz (po), 70 kHz )(px) and 150 kHz (py), respectively, i.e. they are capable of emitting and receiving signals into/ from the surrounding medium at and in the vicinity of these frequencies, respectively.

The 3D geometry of a situation with one reflecting object (target, echo source) ES is illustrated in Fig. 3(b). The distances to the target from the three transducers are designated "Do", "Dx" and "Dy", respectively, while the distance between transducers po and px is designated by Dox. It is furthermore assumed that the distance between po and py is also Dox. In the shown example, Dox and hence Doy equals 1. The last two assumptions need, however, of course be generally made.

In the example, the distances to a reflecting object from the three transducers are determined from the delay between transmission of the sonar pulse to reception of the echoes at the respective frequencies as illustrated in Fig. 3(c), where c is the propagation speed of sound in the medium, in this case water. In figure 3(c) the unit on the frequency axis is kHz and the unit on the time axis is milliseconds. Numerical values are, however, in this and all other examples in the present specification to be regarded as examples only.

The three-dimensional coordinates of the reflecting object can be estimated as:

$$x = \frac{Dx^2 - Dox^2 - Do^2}{-2\,Dox}$$

$$y = \frac{Dy^2 - Dox^2 - Do^2}{-2\,Dox}$$

$$z = -\sqrt{\left| Do^2 - x^2 - y^2 \right|}$$

assuming that z is always negative, the Z-plane for instance corresponding to the surface of the water or any given plane in the water column, where it can be assumed that the target will be located below the XY-plane containing the transducers.

Referring to figure 3(c) there is shown the derivation of the distances between individual transducers (hydrophones) and an object based on a spectrogram of the echo from an object ES received at the individual transducers and the known speed of sound in water. Thus at time approximately equal to 2 (milliseconds), an echo from the object is first received at transducer py at a resonance frequency of 150 kHz. The distance from the transducer py to the object is given by Dy*2/c, where c is the speed of sound in water. At time approximately equal to 2.7 (milliseconds), the transducer po located at the origin receives the echo signal from the object at a resonance frequency of 26 kHz, yielding a distance from the transducer py to the object of Do*2/c and at time approximately equal to 3.6 (milliseconds), the transducer px receives the echo signal from the object at a resonance frequency of 70 kHz, yielding a distance from the transducer py to the object of Dx*2/c. All quantities of the above expressions for the co-ordinate (x, y, z) of the object are now known and these co-ordinates can hence be calculated.

In more advanced implementations, the "L" geometry of this example can be filled in with transducers having intermediate frequencies, so that the spectrogram representation of the returning echoes (Fig 3c) will look like fully drawn lines instead of just the corner and ends. This will reduce ambiguities with multiple objects at similar ranges.

Using image analysis software, the spectrogram can be searched automatically for such "echo-lines" corresponding to different positions of targets, yielding instantaneous 3D maps of sound reflectors in the covered volume.

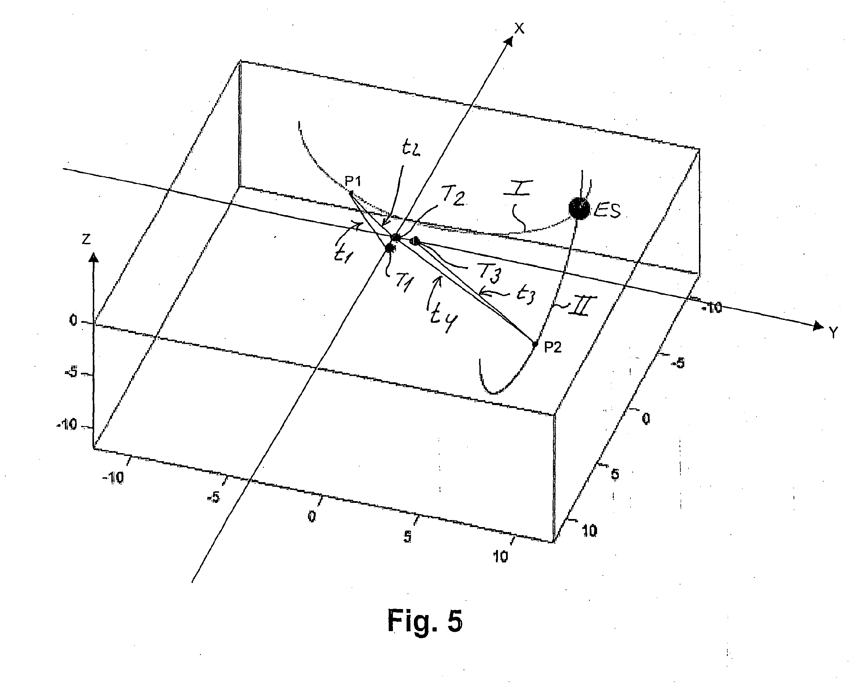

The process of target localisation based in the principles of the present invention is furthermore illustrated by the flow chart in figure 4. A signal generator 1 generates a suitable signal 2 as for instance a broadband pulse signal 3 of a suitably limited duration. This total excitation signal is provided to each of the hydrophones H1, H2, H3 that, due to their resonant nature, will only emit a certain band-limited sound signal into the surrounding water, each hydrophone thus emitting a narrowband sound signal S1, S2, S3 around given centre frequencies F1, F2, F3, respectively. As an alternative, the broadband excitation signal 3 may be filtered through a number of band pass filters, each providing excitation signals to the respective hydrophones that are band-limited according to the specific hydrophone. A switch circuit 4 determines whether transmission (emission) of sound signals from the hydrophones takes place or whether received echo signals from the hydrophones are to be passed on to subsequent function blocks 7, 8, 9 in the system. In figure 4 three hydrophones H1, H2 and H3 are shown as an example of an array suitable to implement the principles of the invention, but the exact layout of the array can vary considerably, both relating to the actual number of hydrophones and relating to its geometrical shape. Thus, the simple L-shaped array described in connection with figure 3 may be used, but also more complicated shapes of arrays may be used, as for instance illustrated in the following in relation to the embodiment shown in figure 5. Also plane arrays, where the transducers (hydrophones) are arranged for instance in a circular or ellipsoidal configuration could be used and even three-dimensional arrays may be used without deviating from the principles of the invention. The only prerequisite for locating an object in a three-dimensional body of medium, such as water, is in fact that the array defines at least a two-dimensional plane in space. Thus, it is understood that the embodiments actually shown and described in this specification are only to be regarded as non-limiting examples of actual implementations of the invention.

Based on the individual times of reception of each of the echo signals and the corresponding frequency content, i.e. the spectrum of each received signal, spectrogram information is determined in block 7 as for instance shown in the frequency-time plot 8, which basically corresponds to the plot shown in figure 3(c). Subsequently, an image analysis for instance comprising the calculations of the (x.y.z) co-ordinates of the target based on the above equations is performed as illustrated at 9 and 10 in figure 4 and a final three-dimensional mapping of one or more objects in the water region beneath the transducer array can hence finally be attained as illustrated at 11 and 12 in figure 4.

The principle of the invention specifically in relation to the simple L-shape transducer array described above can be further illustrated with reference to figure 5 showing the simple L-shaped transducer array T1, T2, T3 located with transducer T2 at the origin, T1 at a first distance from T2 along the x-axis and T3 at a second distance from T2 along the y-axis. The array is located in the plane z = 0. An object (echo source) ES is located in a medium, such as water, below the transducer array, i.e. at a negative z co-ordinate. The plane z = 0 may correspond to the surface of the water. Along each dimension x and y the object ES will lie on a circle I and II, respectively, representing loci of equal time difference between propagation times t1 and t2 for the x-axis array T1, T2 and t3 and t4 for the y-axis array, respectively. Propagation time t1 is the total time from the emission of a signal from transducer T1 to the reception of the corresponding echo signal from the object ES at T1. Propagation time t2 is the total time from the emission of a signal from transducer T2 to the reception of the corresponding echo signal from the object ES at T2. Propagation time t3 is the total time from the emission of a signal from transducer T3 to the reception of the corresponding echo signal from the object ES at T3 and propagation time t4 is the total time from the emission of a signal from transducer T4 to the reception of the corresponding echo signal from the object ES at T4. The position of the object ES is then determined as the point of intersection of the two circles I and II.

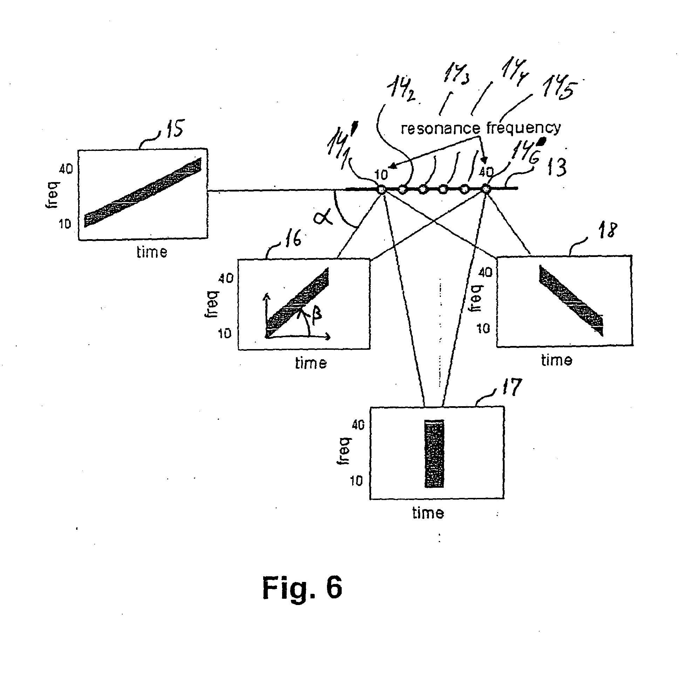

Referring to figure 6 there is shown a second embodiment of the system according to the invention. This embodiment comprises two linear arrays of transducers, for instance of the resonant type described above, where the two arrays intersect each other under an angle a that may be substantially 90 degrees, although in principle any angle different from substantially zero would yield a transducer array configuration that could function according to the principles of the present invention. In figure 6 only one (reference numeral 13) of the two linear arrays is shown, but by application of two arrays intersecting each other at a given angle different from 0, where the two arrays cover different frequency regions, the angles to the echo source relative to each of the arrays can be determined and hence - by comparison of these results - the position in space of the echo source can be determined. The transducers 14 of a given array have different resonance frequencies with the result that the two arrays are truly omnidirectional in three-dimensional space. As the two arrays are both used for emitting the sonar pulses and for receiving the echo signals, the effect of spacially having separated the frequency components is doubled.

By arranging the transducers 14 according to resonance frequency - for instance as shown with six transducers, a first transducer $14_1$ having a resonance frequency of 10 kHz, a last transducer $14_6$ having a resonance frequency of 40 kHz and the intermediate transducers $14_2$, $14_3$, $14_4$ and $14_5$ having progressively higher resonance frequencies between 10 and 40 kHz - the result is that echoes reflected from a given direction will have a unique appearance when viewed in a frequency-time plot. This is illustrated in figure 6 by the plots 15, 16, 17 and 18. Following this principle, the angle $\alpha$ (in the plane defined by the particular transducer array) will become encoded in the appearance in the frequency-time plot of the received echo. Thus, if an echo source is located on the perpendicular bisector of the array, and at a sufficiently far distance from the array, all reflected frequency components will arrive at the array (which is also used as a receptor as in the first embodiment described above) simultaneously. If the echo source is located at another angle $\alpha$ relative to the array, some frequency components will arrive at the array before the arrival of other frequency components and hence reveal the angle $\alpha$ of the object relative to the array. Frequency components emitted by a transducer of the array closer to the echo source than the other transducers will also be the first to arrive at the array as an echo. Thus, there will be obtained a frequency sweep in the frequency-time plot, the direction (the sign of the inclination angle $\beta$) and the inclination $\beta$ of which will provide information about the direction (angle $\alpha$) to the echo source. This effect is schematically illustrated in figure 6, where an echo source located at the perpendicular bisector of the shown array 13 will give rise to the frequency-time plot indicated by reference numeral 17, where $\beta = 90$ degrees. If the echo source is located closest to the first transducer $14_1$, the plot indicated by reference numeral 15 will result, with an angle $\beta$ between 0 and 90 degrees, whereas if the echo source is located closest to the last transducer $14_6$ of the array 13, the plot indicated by reference numeral 18 will result, with an angle $\beta$ between 0 and -90 degrees. Thus, the frequency-time plot will contain the necessary information about the angle to the echo source relative to the transducer array in the plane defined by that particular array.

**Claims**

1. A method of echo localisation of objects (echo sources) in a medium, such as water, the method comprising the following steps:

   - providing at least three receiving means defining either a two dimensional or a three-dimensional surface in space, where each of the receiving means functions to provide an output signal upon reception of an acoustic wave energy signal;
   - providing at least one emitting means functioning to emit an acoustic wave energy signal into said medium when supplied with a driver signal;
   - at a given time from said at least one emitting means emitting at least one acoustic wave energy signal into said medium;
   - at each of said receiving means determining the time of reception of an echo signal from said object caused by reflections of said acoustic wave energy signals from said object;
   - based on said times of reception determining the co-ordinates of said object.

2. A method according to claim 1, where said receiving and emitting means are implemented as transducers that can function both as emitting means and receiving means.

3. A method according to claim 1 or 2 comprising the same number of emitting and receiving means.

4. A method according to claim 1, 2 or 3, where said emitting and receiving means are hydrophones.

5. A method according to claim 4, where said hydrophones are **characterised by** individual resonance frequencies and individual operational frequency ranges that are band limited about said individual resonance frequencies.

6. A method according to any of the preceding claims, where three separate, combined emitting and receiving transducers (po, px, py) each **characterised by** individual resonance frequencies (F1, F2, F3) are used, these transducers forming an equilateral triangular configuration with the distance Dox between transducers px and po being equal to the distance between transducers py and po, the transducers thereby defining a plane (z = 0), where the transducers emit wave energy signals into a medium, such as water, containing an echo source (ES), whereby the co-ordinates (x, y, z) of the echo source (ES) can be determined based on the following expressions:

$$x = \frac{Dx^2 - Dox^2 - Do^2}{-2\,Dox}$$

$$y = \frac{Dy^2 - Dox^2 - Do^2}{-2\,Dox}$$

$$z = -\sqrt{\left| Do^2 - x^2 - y^2 \right|}$$

where Dx is the distance from transducer px to the echo source ES, Dy is the distance from transducer py to the echo source ES, Do is the distance from transducer po to the echo source ES,
where the distances Dx, Dy and Do are determined from the times of reception tx, ty and to of an echo signal at each individual transducer px, py and po based on the following expressions:

$$Dx = tx * c/2$$

$$Dy = ty*c/2$$

$$Do = to*c/2$$

where c is the propagation speed of the wave energy signals in the specific medium, such as water.

7. A method according to any of the preceding claims 1 to 5 comprising the provision of at least one array of transducers ($14_1$, $14_2$, $14_3$, $14_4$, $14_5$, $14_6$) that can function both as signal emitters and signal receptors, each individual transducer being **characterised by** a specific resonance frequency/band-limited operative frequency range (F1, F2, F3, F4, F5, F6), the method comprising:

- providing said transducers with an excitation signal that is able to cause each individual transducer to emit a wave energy signal at said specific resonance frequency or in said specific band-limited operative frequency range (F1, F2, F3, F4, F5, F6) of each individual transducer;
- at each of said transducers ($14_1$, $14_2$, $14_3$, $14_4$, $14_5$, $14_6$) receiving an echo signal from an echo source in the surrounding medium, such as water, at said specific resonance frequency or in said specific band-limited operative frequency range (F1, F2, F3, F4, F5, F6) of each individual transducer;
- recording the time of reception (t1, t2, t3, t4, t5, t6) of said echo signals at each of said transducers ($14_1$, $14_2$, $14_3$, $14_4$, $14_5$, $14_6$)
- based on said individual times of reception (t1, t2, t3, t4, t5, t6) and the corresponding resonance frequencies/ operative frequency ranges of each individual transducer determining the relationship (15, 16, 17, 18) between the individual time of reception (t1, t2, t3, t4, t5, t6) and the corresponding specific resonance frequency/operative frequency range (F1, F2, F3, F4, F5, F6) of each individual transducer;
- based on said relationship determining the angle ($\alpha$) between said at least one array of transducers ($14_1$, $14_2$, $14_3$, $14_4$, $14_5$, $14_6$) and the direction to the echo source (ES).

8. A method according to claim 7, where said relationship is the inclination angle ($\beta$) of a substantially straight line formed in a plot of individual resonance frequency/operative frequency range versus individual reception time or vice versa.

9. A method according to claim 7 or 8, where said at least one array is linear.

10. A method according to claim 7, 8 or 9, where two arrays are used that form an angle different from zero with each other.

11. A method according to claim 10, where said angle between the two arrays is substantially equal to 90 degrees.

12. A system for echo localisation of objects (echo sources) in a medium, such as water, the system comprising:

- a two- or three-dimensional array of receiving transducers that provide an electrical output signal upon reception of an acoustic wave energy signal;
- at least one emitting transducer functioning to emit an acoustic wave energy signal into said medium when said at least one emitting transducer is supplied with a driver signal;
- means for driving said at least one emitting transducer comprising a signal source and, if necessary, a power amplifier;
- means for determining the times of reception of the signals received by said receiving transducers;
- means for determining the co-ordinates of an object (echo source) in said medium based on said determined times of reception of the signals received by said receiving transducers.

13. A system according to claim 12, where said transducers are hydrophones that can function both as emitters of an acoustic wave energy signal and as receptors for such signals.

14. A system according to claim 12 or 13, comprising:

- three separate, combined emitting and receiving transducers (po, px, py), each **characterised by** individual resonance frequencies (F1, F2, F3), these transducers forming an equilateral triangular configuration with the distance Dox between transducers px and po being equal to the distance between transducers py and po, the transducers thereby defining a plane (z = 0), where the transducers are provided with drive signals for emitting wave energy signals into a medium, such as water, containing an echo source (ES),

- means for determining the reception times tx, ty, to of echo signals at each of said transducers caused by reflections from said echo source (ES),

- whereby the co- ordinates (x, y, z) of the echo source (ES) can be determined based on the following expressions:

$$x = \frac{Dx^2 - Dox^2 - Do^2}{-2\,Dox}$$

$$y = \frac{Dy^2 - Dox^2 - Do^2}{-2\,Dox}$$

$$z = -\sqrt{\left| Do^2 - x^2 - y^2 \right|}$$

where Dx is the distance from transducer px to the echo source ES, Dy is the distance from transducer py to the echo source ES, Do is the distance from transducer po to the echo source ES,

where the distances Dx, Dy and Do are determined from the times of reception tx, ty and to of an echo signal at each individual transducer px, py and po based on the following expressions:

$$Dx = tx\,{}^{*}c/2$$

$$Dy = ty^{*}c/2$$

$$Do = to^{*}c/2$$

where c is the propagation speed of the wave energy signals in the specific medium, such as water.

**15.** A system according to claim 12 or 13 comprising:

- at least one array of transducers ($14_1$, $14_2$, $14_3$, $14_4$, $14_5$, $14_6$) that can each function both as signal emitters and signal receptors and where each individual transducer is **characterised by** a specific resonance frequency/band-limited operative frequency range (F1, F2, F3, F4, F5, F6);
- excitation signals generating means for providing an excitation signal to each of said transducers, said excitation signal being able to cause each individual transducer to emit a wave energy signal at said specific resonance frequency or in said specific band-limited operative frequency range (F1, F2, F3, F4, F5, F6) of each individual transducer;
- means for determining the time of arrival (t1, t2, t3, t4, t5, t6) of an echo signal at each of said transducers;
- means for determining a relationship between the specific resonance frequency/band-limited operative frequency range and time of arrival at each of said transducers;
- means for determining the angle ($\alpha$) between the transducer array and the direction to the echo source (ES) based on said relationship.

**16.** A system according to claim 15, where said relationship is the inclination angle (β) of a substantially straight line formed in a plot of individual resonance frequency/operative frequency range versus individual reception time or vice versa.

**17.** A system according to claim 15 or 16, where said at least one array is linear.

**18.** A system according to claim 15, 16 or 17, where two arrays are used that form an angle different from zero with each other.

**19.** A system according to claim 18, where said angle between the two arrays is substantially equal to 90 degrees.

I:
~ 200 kHz

II: ~ 20 - 50 kHz

**PRIOR ART**

**Fig. 1**

tow direction

transmitting transducer array

transmitted beam

receiver array

examples of
phased receiving
beams

example points
examined
with example
phased beams

Objects on the sea floor

PRIOR ART

Fig. 2

**Fig. 3(a)**

**Fig. 3(b)**

**Fig. 3(c)**

Fig. 4

Fig. 5

**Fig. 6**

**European Patent Office**

## EUROPEAN SEARCH REPORT

Application Number

EP 07 01 4389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/222778 A1 (PIESINGER GREGORY HUBERT [US]) 4 December 2003 (2003-12-04) | 1-5,12, 13 | INV. G01S15/87 |
| Y | * the whole document * | 6,14 | G01S15/96 |
| X | US 3 723 960 A (HARRIS J) 27 March 1973 (1973-03-27) | 1,4,5,12 | ADD. G01S15/42 |
| Y | * abstract; figure 1 * * column 1, lines 12-67 * * column 3, lines 25-60; claim 1 * | 6,14 | |
| Y | BAGLEY P M ET AL: "MEASUREMENT OF FISH MOVEMENTS AT DEPTHS TO 6000 M USING DEEP-OCEAN LANDER INCORPORATING A SHORT BASE-LINE SONAR UTILIZING MINIATURE CODE-ACTIVATED TRANSPONDER TECHNOLOGY" MEASUREMENT SCIENCE AND TECHNOLOGY, IOP, BRISTOL, GB, vol. 10, no. 12, December 1999 (1999-12), pages 1214-1221, XP000935539 ISSN: 0957-0233 * paragraph [02.7]; figure 10 * | 6,14 | |
| X | US 5 150 336 A (SULLIVAN SHELBY F [US] ET AL) 22 September 1992 (1992-09-22) | 1,7-10, 12,15-18 | TECHNICAL FIELDS SEARCHED (IPC) G01S |
| Y | * figures 1a,7 * * column 1, lines 6-25,57-62 * * column 3, lines 1-13 * * column 4, lines 58-62 * * column 5, line 31 - columns 6-17 * * column 10, lines 26-48 * | 11,19 | |
| X | US 5 923 617 A (THOMPSON R LEE [US] ET AL) 13 July 1999 (1999-07-13) | 1,7-10, 12,15-18 | |
| Y | * column 4, lines 9-17; figures 1,3 * * column 5, lines 56-59 * | 11,19 | |

-/--

The present search report has been drawn up for all claims

| Place of search | Date of completion of the search | Examiner |
|---|---|---|
| Munich | 17 July 2008 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 01 4389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 947 854 A (JAPAN RADIO CO LTD [JP]) 6 October 1999 (1999-10-06) | 1,2,12, 13 | |
| Y | * paragraphs [0001], [0005], [0008], [0017], [0018]; figures 2,3A * ----- | 11,19 | |
| A | US 3 980 983 A (SHANNON JAMES V) 14 September 1976 (1976-09-14) * column 1, line 4 - column 2, line 15; figures 1,5 * ----- | 7-11, 15-19 | |

TECHNICAL FIELDS
SEARCHED      (IPC)

The present search report has been drawn up for all claims

| Place of search | Date of completion of the search | Examiner |
|---|---|---|
| Munich | 17 July 2008 | Lupo, Emanuela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

European Patent
Office

Application Number

EP 07 01 4389

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**European Patent Office**

**LACK OF UNITY OF INVENTION
SHEET B**

The Search Division considers that the present European patent application does not comply with the requirements of unity of invention and relates to several inventions or groups of inventions, namely:

```
1. claims: 1-6,12-14

        Localisation of echo sources by means of at least three not
        aligned receiving means
                              ---

2. claims: 1-5,7-13,15-19

        Localisation of echo sources by means of at least one array
        of transducers
                              ---
```

**ANNEX TO THE EUROPEAN SEARCH REPORT
ON EUROPEAN PATENT APPLICATION NO.**                    EP 07 01 4389

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2008

| Patent document cited in search report | | Publication date | Patent family member(s) | | Publication date |
|---|---|---|---|---|---|
| US 2003222778 | A1 | 04-12-2003 | NONE | | |
| US 3723960 | A | 27-03-1973 | NONE | | |
| US 5150336 | A | 22-09-1992 | NONE | | |
| US 5923617 | A | 13-07-1999 | NONE | | |
| EP 0947854 | A | 06-10-1999 | CA | 2266946 A1 | 30-09-1999 |
| | | | CN | 1234510 A | 10-11-1999 |
| | | | DE | 69917830 D1 | 15-07-2004 |
| | | | DE | 69917830 T2 | 14-07-2005 |
| | | | ES | 2218893 T3 | 16-11-2004 |
| | | | JP | 11344566 A | 14-12-1999 |
| | | | NO | 991523 A | 01-10-1999 |
| | | | US | 6198692 B1 | 06-03-2001 |
| US 3980983 | A | 14-09-1976 | NONE | | |

EPO FORM P0459

For more details about this annex : see Official Journal of the European Patent Office, No. 12/82